# EUROPEAN PATENT APPLICATION

(11) **EP 3 539 390 A1**
(43) Date of publication of application: **18.09.2019**
(21) Application number: 18162423.0
(22) Date of filing: 16.03.2018
(51) Int. Cl.: A23G 1/04, A23G 1/20, A23G 3/02, A21C 9/08

(54) **FOOD DEPOSITING APPARATUS**

(71) Applicant: Aasted ApS, 3520 Farum (DK)
(72) Inventor: Prætorius, Michael, DK-2880 Bagsværd (DK)
(74) Representative: Heiden, Finn

(57) **Abstract**

Food depositing apparatus (1) comprising an elongated trough (2) and at least one feed roller (12) arranged longitudinally in the trough (2) for transporting the mass in direction against one longitudinal mass deposit opening (13) at the bottom (14) of the trough (2). The feed roller periphery (15) comprises a number of longitudinally extending cam parts (16) and intermediary mass transport recesses (17). The pressure side (19) of the deposit opening (13) is closed by a longitudinally extending mass guiding plate (20), which is supported, so that it is movable in directions radially in towards and out from the feed roller periphery (15).

The mass guiding plate (20) comprises a knife part (21) with a longitudinally extending edge (22) arranged at the periphery (15) of the feed roller (12). The mass guiding plate (20) is in engagement with a pivoting device (25), which is adapted to control the radial movements of the guiding plate (20) by following the radial geometrical positions of the feed roller periphery (15) during its rotation and influencing the radial position of the guiding plate (20).

The edge (22) of the knife part (21) follows the peripheral surface (15) of the feed roller (12) during rotation thereof, closely or in a predetermined distance thereof. The guiding plate effectively closes off for leaks of mass through the pressure side of the opening. Wearing of the knifes edge may automatically be adjusted out so that it is not necessary to replace parts.

## Description

The present invention concerns the field of continuous food depositing apparatuses used in the confectionery or bakery industry comprising an elongated trough, at least one feed roller arranged longitudinally in the trough for transporting the mass in direction against at least one longitudinal mass deposit opening at the bottom of the trough. The feed roller periphery comprises a number of longitudinally extending cam parts and intermediary food transport recesses. The longitudinal mass deposit opening has an open mass feeding side and an opposite, closed pressure side.

The inventive apparatus is typically an extruder for depositing strands of mass to be cut into size or lumps of mass which could be any type of dough to be baked into cookies, cakes or the like. It could be marzipan, caramel mass, toffee mass or even jam. It could be decorated or even moulded into shape in a further processing step. It could also be confectionery mass, for example chocolate mass with a content of pure cocoa mass or any mass having a content of chocolate-like mass.

Furthermore, dosing means are often arranged below the bottom opening or openings of the trough for shaping the mass as desired. It could be as a longitudinally extending block with openings and nozzles beneath adapted for extruding strands of mass with the desired cross-section directly at an underlying transport-web. The strands may also be cut by fastmoving knifes or wire.

In the longitudinally extending block with the openings may also be arranged pairs of sprocket wheels above each opening, which is acting as pumps and controllable to the extent and amount of mass deposited thereby shaping a food product.

The pumps are mostly driven by common shafts having axis of rotation extending longitudinally with the trough.

The mass of confectionery or dough is deposited continuously as strands or as gobs or lumps on an underlying conveyor. For example, may rows of lumps of dough be deposited and transported on to a baking oven and possibly further on to stations making final treatments with decorations of masses such as chocolate, chocolate-like recipes or other types of recipes with sugar content. Any type of mass used for decoration purposes on bakery articles apply. When the mass constitutes of confectionery such as chocolate or chocolate-like mass, it is typically deposited for moulding purposes into underlying mould cavities or deposited directly on the conveyor belt.

GB736047 discloses a food depositing apparatus of the introductory art by which two diametrically-opposed, longitudinally extending vanes at the roller periphery have rectangularly profiles. A valve roller is arranged in a supporting channel in the bottom of the trough. Half of the materials of the valve roller is removed so that the section of it is a half-circle. The upper edge of the valve roller makes light rubbing contact with the periphery of the feed roller. An arm and a tension spring urges the half-round valve roller to a position in which it lies wholly in its seating so that it is clear of the orbit of the vanes of feed roller when they pass, thereafter returning to a 90°pivoted position for passage of mass to the openings. During the passage of the feed roller vane and the concomitantly turning of the valve roller the geometrical fit between them are not present. Quite large amounts of mass then slip through so that it is not deposited, instead it follows the feed roller up to the mass in the trough once more. It is not desirable to have mass recirculating to the trough in this manner. Especially dough is compressed further so that its texture is changed. Inclusions in the mass may also be stuck in the openings between the rollers.

EP0909534A2 discloses a food extruder having a feed roller arranged longitudinally at the bottom of a trough for transporting the mass in direction against a longitudinal opening. The feed roller has a circular cross-section with a smooth peripheral surface onto which a knifes edge of a longitudinally extending scraper plate slides. The scraper plate is hinged at the opposite longitudinal edge of the plate being inclined to the peripheral surface of the feed roller so that it constitutes the pressure side of the opening being pressed on to the periphery of the feed roller. However, a number of discs are positioned at the feed roller arranged with the same mutual distance along the periphery thereof. The discs fit into radial incisions in the scraper plate. In-between the discs are then provided chambers for extrusion of strands of mass. The construction is complicated and wearing of the many surfaces sliding against each other must reduce the realistic up-time for production before parts have to be refitted. When the mass has content of abrasive particles such as sucker the wear is high. With the wear follows decreasing pressure at the pressure side of the opening as the mass sieves through the increasing gaps created. Decreasing weight accuracy of the extruded mass then follows.

A first problem to be solved is to provide a food depositing apparatus of the introductory art with which it is possible to maintain a high weight accuracy of the deposited mass even when the mass for longer periods has high content of abrasive particles.

Another problem to be solved is to provide a construction maintaining the mass pressure at the opening even for long time running.

A further problem is to provide a simple construction with few parts that is reliable and fast and easy to clean and service.

The inventive solution is characterised in, that the pressure side is closed by a longitudinally extending mass guiding plate, which is supported, so that it is movable in directions radially in towards and out from the feed roller periphery, which mass guiding plate comprises a knife part with a longitudinally extending edge arranged at the periphery of the feed roller, that the mass guiding plate is in engagement with a pivoting device, which is adapted to control the radial movements of the guiding plate by following the radial geometrical positions of the feed roller periphery during its rotation and influencing the radial position of the guiding plate, so that the edge of the knife part follows the peripheral surface of the feed roller during rotation thereof, closely or in a predetermined distance thereof.

During revolution of the feed roller is mass in the trough continuously filling into the intermediary recesses between the longitudinally extending cam parts. Being caught in the recesses between successive cam parts the mass is continuously transported from the trough and towards the longitudinal mass deposit opening at the bottom of trough.

The mass approaches the opening from the open mass feeding side and flow through the opening while exerting pressure against the longitudinally extending mass guiding plate at the opposite side of the opening.
During rotation of the feed roller the pivoting device controls the radial movements of the guiding plate by following the radial geometrical positions of the feed roller periphery and influencing the radial positions of the guiding plate so that the edge of the knife part follows the peripheral surface closely or in a predetermined distance thereof. The guiding plate effectively closes off for leaks of mass through the pressure side of the opening. Wearing of the knifes edge may automatically be adjusted out so that it is not necessary to replace parts.
The mass flow smoothly over the mass guiding plate and leaves it in a radial direction down through the longitudinal opening at the bottom of the trough.
Any ingredients in the mass such as nuts, chocolate pieces or other types of ingredients are gently swept into the opening without any impact on the ingredients. Then large amount of mass with or without ingredients are transported at the same time through the opening. This ensures, that the texture of the mass such as of dough is not being influenced by the transport.

The simple combination of the feed roller being made in one piece with the longitudinal cams and the pivoting device with the pressure plate makes it possible to choose wear-resistant materials such as steel types or laminated epoxy materials having long lasting wear resistance against mass with abrasive ingredients such as sucker.
The apparatus is fast and simple to dismantle, clean and rearrange again for new production.

When the pivoting device comprises a longitudinally extending shaft, the periphery of which is engaged by one or more hinges with the side of the plate, even the smallest angular pivoting of the shaft is transferred to a radial movement of the guiding plate. The solution is simple, reliable and technically responsive.

The longitudinally extending shaft may advantageously be connected to an electrical servo-motor, which is controlled by a control unit such as a computer programmed with the radial geometrical positions of the feed roller periphery during rotation thereof. During rotation of the feed roller the pivoting of the shaft is controlled by computer, which at any angular position of the feed roller submit the appropriate signal to the servo-motor. The servo-motor then pivots the shaft which consequently moves the mass guiding plate to the instantaneously required radial position, so that the edge of the knife part is close to or in a predetermined distance of the periphery of the feed roller.

When the pivoting of the shaft is adapted to the radial position of the feed roller periphery during its rotation, so that the edge of the knife part is positioned in a constant distance from the peripheral surface of the feed roller providing a gap of a constant width therebetween, then the size of the gap is advantageously adapted to the particular type of mass being deposited. A larger gap of around 1,0-2,0 mm is reducing the wear of the knifes edge and the roller periphery when the mass has content of abrasive ingredients such as dough for butter cookies with high content of sucker. A smaller gap of around 0,1-1,0 mm is certainly diminishing the leak of mass at the pressure side when low viscosity mass is deposited.

The width of the gap is advantageously between 0,1 mm and 2,0 mm for low viscosity to high viscosity mass.

When at least one longitudinally extending bar is arranged in a longitudinal groove in the shaft and is connected to the side of the plate, the connection of the bar to the plate may simply be rigid, such as being welded on to the plate or fixed by other fastening means such as screws or the like.

The pressure side of the opening part of the bottom of the trough may have planar surfaces with radial extension, so that it is supporting the planar side of the mass guiding plate as the mass flow in the opening presses the plate on to the planar surfaces.

When the cross-sections of the cams, the recesses and their mutual transitions consist of arc-shaped pieces, the cross-sections of the cams, the recesses and their mutual transitions are smooth and without edges.

When at least six longitudinally extending, raised cam parts and intermediary food transport recesses are evenly arranged around the periphery of the feed roller, each recess extends over maximum 60° from the top of one cam to the succeeding cam at the periphery. At least two recesses are always fully exposed to the mass in the trough so that it is safely caught into the recesses filling them out fully thereafter being transported further towards the opening as one recess is constantly fully closed against the inside wall of the trough. The performance of the apparatus is then consistently linear in the output flow of the deposited mass.

The trough comprises a further longitudinally extending, auxiliary roller arranged above the main roller and close to the inside of the trough. Masses with a very low inner shear force and high inner smearing such as dough for cookies or marzipan may then be perfectly feed to the main roller with a sufficient pressure build up.

The invention is explained further below by reference to preferred embodiments as well as the drawing, in which
fig. 1 discloses schematically in perspective an apparatus according to the invention and an underlying conveyor onto which the mass is continuously deposited as articles in rows,
fig. 2 the apparatus of fig. 1, seen in vertical section of the trough,
fig. 3 the left trough of the apparatus, seen from the end in vertical section,
fig. 4 schematically in perspective the pivoting device with the pivoting shaft and the hinged mass guiding plate from the right trough of the apparatus in figures 1, 2 and is a mirrored version of the pivoting device of the left trough disclosed in fig. 3,
fig. 5 schematically in vertical section part of the bottom part of the left trough of figure 3 with the mass deposit opening with the adjacent part of the feed roller, the pivoting shaft and the hinged mass guiding plate in a radial position where its knife edge is at the bottom of a recess at the roller periphery,
fig. 6 the same as in fig. 5 in a rotated position of the feed roller and radially shifted position of the plate having its knife edge approaching the top of a cam,
fig. 7 the same as in figures 5 and 6 in a further rotated position of the feed roller and radially shifted position of the plate having its knife edge passing over the top of a cam at the periphery of the feed roller, and
fig. 8 the same as in figures 5-7 in an even further rotated position of the feed roller and radially shifted position of the plate having its knife edge been passing over the top of the cam now approaching the bottom of the recess.

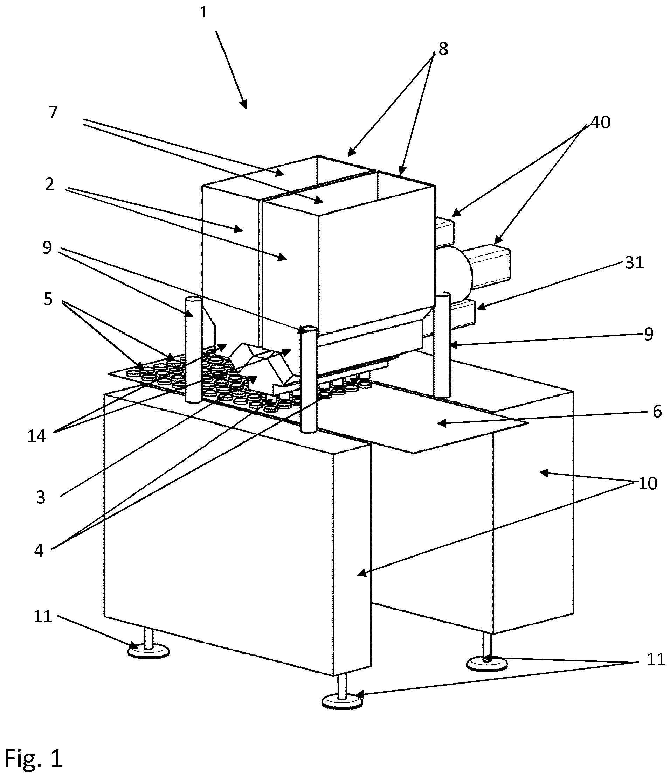

The inventive food depositing apparatus 1 schematically disclosed in fig. 1 comprises two elongated troughs 2, which contains the edible mass to be deposited. At the depicted embodiment two troughs 2 are arranged in a mirrored like manner having a common, longitudinally extending block 3 with non-disclosed inside channels and openings leading to nozzles 4 beneath adapted for extruding strands of mass with the desired cross-section. The strands are cut by non-disclosed wire cutter into the precise articles 5 falling on to an underlying conveyor 6. The inventive solution applies for each separate trough, whether it is a single trough in a production machine or whether there are two or more troughs with different masses arranged in the same apparatus, typically for depositing articles combined of different mass types or colours.

In the longitudinally extending block 3 may also be arranged pairs of sprocket wheels above each nozzle 4 which is acting as pumps and controllable to the extent and amount of mass deposited thereby shaping a food product 5. Such pumps are mostly driven by a common shaft and electric motor having axis of rotation extending longitudinally with the troughs 2.

The troughs 2 are open 7 at the top 8 and when the mass to be deposited is kneaded dough, it is typically put into the trough as great lumps from the top. However, the confectionery mass could also be continuously feed to the through via tubes when it has sufficient flow ability as for example liquid chocolate.

By the disclosed example the mass is deposited as articles or lumps 5 of mass consequently arranged in rows at the conveyor 6, which moves further on after each dosing operation. The conveyor 5 could be moved on continuously or with intermittent start-stop movements. The mass is typically confectionery or dough.

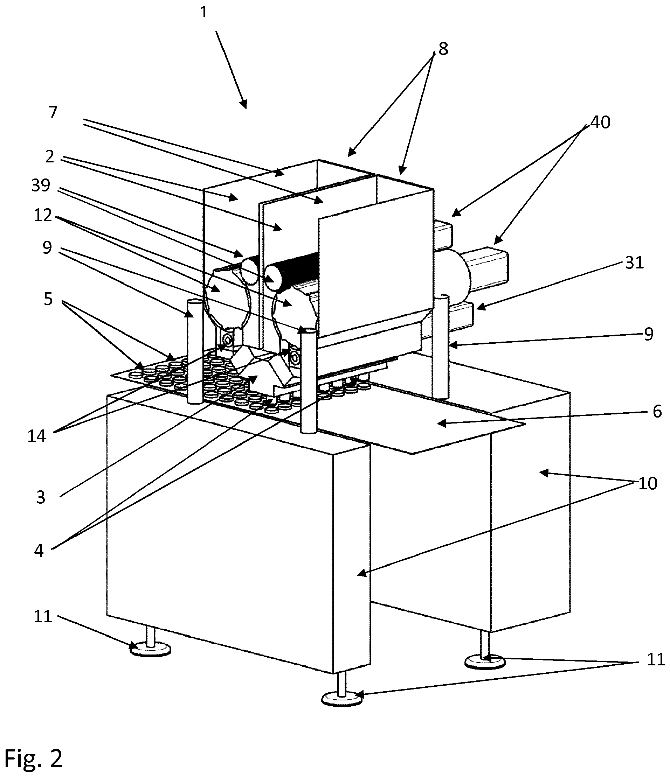

The rows of lumps 5 of mass are transported on to a baking oven when we are talking about dough, and possibly further on to stations making final treatments with decorations of masses such as chocolate or chocolate-like recipes. When the mass constitutes of confectionery such as toffee, caramel or chocolate or chocolate-like mass, the mass is then typically deposited for moulding purposes into underlying mould cavities or directly on the conveyor as depicted in fig. 1 and 2.

The troughs 2 are carried and positioned by four columns 9, which are engaged inside the support frame 10 positioned by adjustable feet 11 at the factory floor.

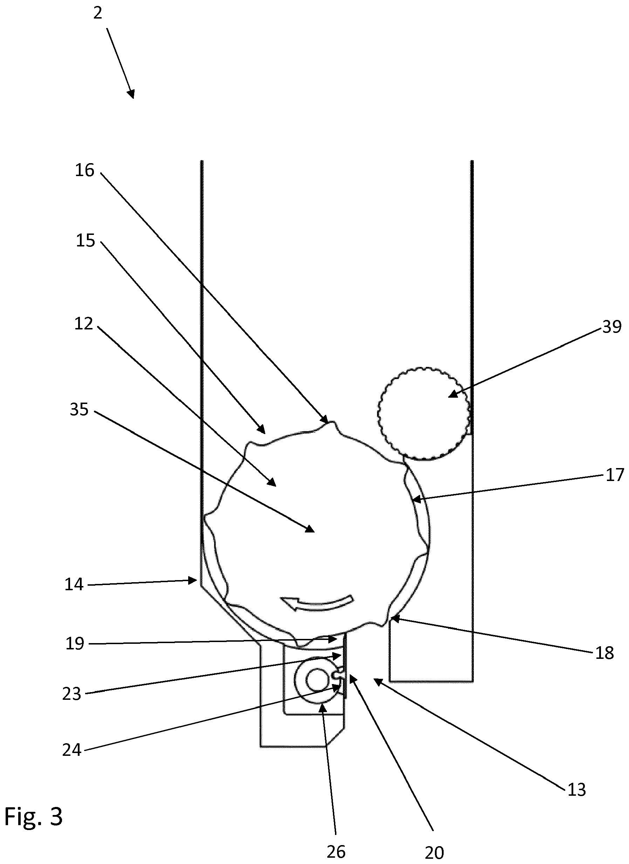

Each trough 2 comprises at least one feed roller 12 arranged longitudinally in the trough for transporting the mass in direction against at least one longitudinal mass deposit opening 13 at the bottom 14 of the trough 2 as schematically disclosed in figures 2 and 3.

The left trough 2 of figures 1 and 2 is schematically disclosed in figure 3, as the longitudinal block 3 with the common channels and nozzles 4 is removed for ease of clarity explaining the inventive solution.

The feed roller periphery 15 comprises a number of longitudinally extending cam parts 16 and intermediary mass transport recesses 17. The longitudinal mass deposit opening 13 has a longitudinal, open mass feeding side 18 and an opposite, closed pressure side 19.

The pressure side 19 is closed by a longitudinally extending mass guiding plate 20, which is supported, so that it is movable in directions radially in towards and out from the feed roller periphery 15.

The mass guiding plate 20 comprises a knife part 21 with a longitudinally extending edge 22 arranged at the periphery 15 of the feed roller 12. The pressure side 19 of the opening 13 at the bottom 14 of the trough 2 have planar surfaces 23 with radial extension, so that it is supporting the planar side 24 of the mass guiding plate 20 as the mass flow in the opening 13 presses the plate 20 on to the planar surfaces 23.

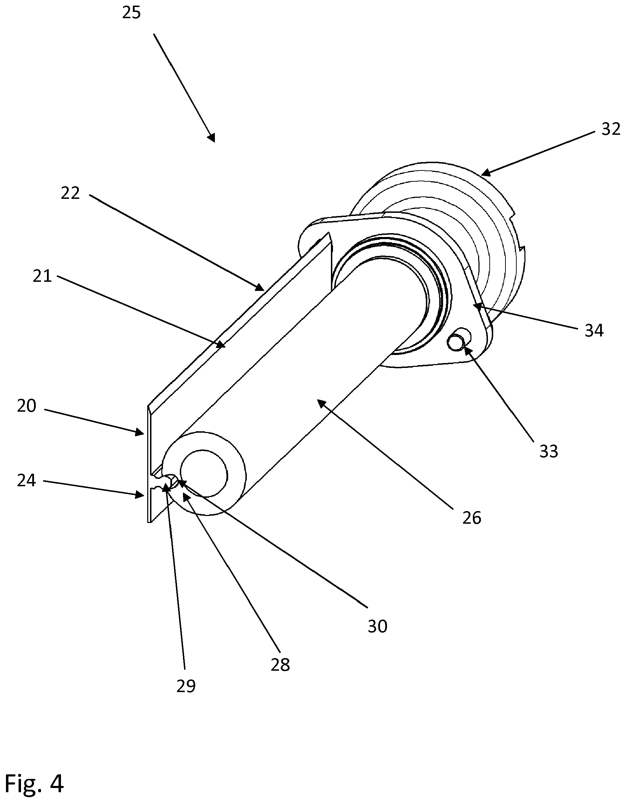

The mass guiding plate 20 is in engagement with a pivoting device 25 as disclosed separately in figure 4. The pivoting device 25 is adapted to control the radial movements of the guiding plate 20 by following the radial geometrical positions of the feed roller periphery 15 during its rotation and influencing the radial position of the guiding plate 20. The edge 22 of the knife part 21 follows the peripheral surface 15 of the feed roller 12 during rotation thereof, closely or in a predetermined distance thereof.

The pivoting device 25 comprises a longitudinally extending shaft 26, the periphery 27 of which is engaged by one or more hinges 28 with the side 24 of the plate 20.

At the preferred embodiment disclosed in figure 4, the hinge 28 is comprising one longitudinally extending bar 29 arranged in a longitudinal groove 30 in the shaft 26. The bar 29 is typically welded to the side of the plate 20. However, other known fastening means such as screws or rivets may be applied as well.
The bar 29 may have a circular cross-section as disclosed in figure 4, so that it fits smoothly into the groove 30, which may have a circular section at the bottom thereof as well. However, other shapes are applicable as well as long as the engagement between the two parts are smooth and enhances an angular movement therebetween when the shaft 26 pivots and the mass guiding plate 20 is moved radially.
The hinge 28 may also be arranged by other means as long as the guiding plate 20 is supported and allowed to move radially when the pivoting shaft 26 is controlled to pivot. The bar 29 may be portioned in two or more pieces arranged along the plate in the length of the shaft 26. The bar could also be substituted by a number of connection points between the periphery 27 of the pivoting shaft 26 and the side 24 of the plate 20. It could for example be such as by metal spheres welded to the plate engaging into the groove 30. The spheres could also be made of hard rubber fastened to the plate by screws.

The longitudinally extending pivoting shaft 26 is connected to an electrical servo-motor 31 typically via a clutch 32 disclosed in figure 4. Then, it is possible to remove the pivoting device 25 in a fast manner by first removing the servo-motor and easing two screws 33 at a flange 34 for removing the device 25 and cleaning of the knife and shaft.

The servo-motor 31 is controlled by a control unit such as a computer programmed with the varying radial geometrical positions of the feed roller periphery 15 during a complete rotation of the feed roller 12.

The radial geometrical positions of the feed roller periphery 15 is determined by the cross-sectional shape of the cams 16 and the recesses 17 and their radial distance from the centre 35 of the feed roller 12 when it rotates. The cross-sections of the cams 16, the recesses 17 and their mutual transitions consist of arc-shaped pieces as disclosed in figures 3, 5-8, so that the cross-sections of the cams 16, the recesses 17 and their mutual transitions are smooth and without edges. The computer is programmed with the varying radial geometrical positions of the feed roller periphery 15 at the position of the knifes edge 22 of the mass guiding plate 20 during a complete rotation of the feed roller 12. The particular angular position of the pivoting shaft 26 which ensures that the knifes edge 22 is positioned at a constant distance from the feed roller periphery 15 is calculated and programmed into the computer so that it can control the electric servo-motor 31 accordingly. The distance is controlled to a constant width of a gap between 0,1mm and 2,0 mm, most preferably between 0,5 mm and 1,0 mm however depending on the mass type and its content.

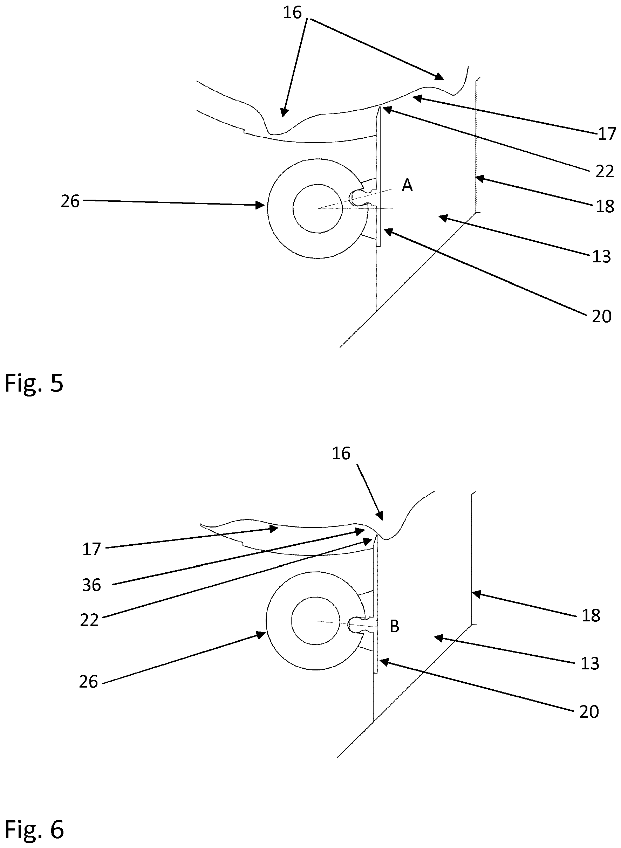

Referring to figures 5-8 the functionality of the inventive solution and the passage of mass through the deposit opening 13 is explained in detail. The rotation of the feed roller 12 is clock-wise as disclosed by the arrow at the feed roller 12 in figure 3.

As disclosed in figure 5 the shaft 26 is positioned in the angular position A as the edge 22 of the mass guiding plate 20 is travelling in a constant distance of 0,5 mm from the bottom of the recess 17 during rotation of the feed roller 12. The mass is pushed by the trailing cam 16 against the mass guiding plate 20 and further out through the opening 13.

In figure 6 the shaft 26 is pivoted further clock-wise with higher angular velocity to the position B having moved the plate 20 downwards as the leading peripheral surface 36 of the cam 16 is being passed by the edge of the plate 20, still providing a gap of the same constant width of 0,5 mm therebetween.

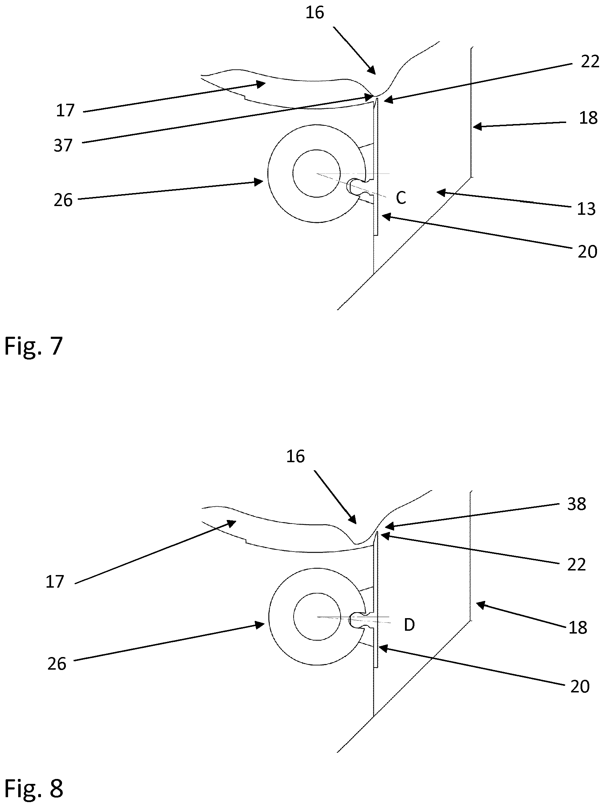

In figure 7 is disclosed that the shaft 26 is pivoted by the servo-motor to the position C, which is the greatest angular offset from horizontal as the mass guiding plate 20 is then moved to the lowermost position as the edge 22 thereof is passing over the top 37 of the cam 16 at a distance of 0,5 mm.

In figure 8 is disclosed that the shaft 26 is pivoted to a smaller and smaller angular offset D as the feed roller 12 rotates further and the plate 20 is moved radially upwardly as the edge 22 thereof passes over the trailing peripheral surface 38 of the cam 16, still in a distance of 0,5 mm therefrom.

During revolution of the feed roller 12 by the action of an electric motor 40, the mass in the trough 2 is continuously filling into the intermediary recesses 17 between the longitudinally extending cam parts 16. Being caught in the recesses 17 between successive cam parts 16 the mass is continuously transported from the trough 2 and towards the longitudinal mass deposit opening 13 at the bottom of trough.

The mass approaches the opening from the open mass feeding side and flow through the opening while exerting pressure against the longitudinally extending mass guiding plate 20 at the opposite side of the opening.

The guiding plate 20 effectively closes off for leaks of mass through the pressure side of the opening 13. Wearing of the knifes edge 22 may automatically be adjusted out so that it is not necessary to replace parts.

The mass flow smoothly over the mass guiding plate 20 and leaves it in a radial direction down through the longitudinal opening 13 at the bottom of the trough. Any ingredients in the mass such as nuts, chocolate pieces or other types of ingredients are gently swept into the opening 13 without any impact on the ingredients. Then large amount of mass with or without ingredients are transported at the same time through the opening. This ensures, that the texture of the mass such as of dough is not being influenced by the transport.

As disclosed in figure 3 a further longitudinally extending, auxiliary roller 39 may be arranged above the main roller 12 and close to the inside of the trough. The auxiliary roller is helpful to build up pressure and advance certain mass types such as butter dough having high content of fat towards the feed roller 12.
- 1:: food depositing apparatus
- 2:: trough
- 3:: block
- 4:: nozzles
- 5:: articles
- 6:: conveyor
- 7:: open
- 8:: top of trough
- 9:: columns
- 10:: support frame
- 11:: adjustable feet
- 12:: feed roller
- 13:: mass deposit opening
- 14:: bottom of trough
- 15:: feed roller periphery
- 16:: cam parts
- 17:: recesses
- 18:: open mas feeding side
- 19:: opposite, closed pressure side
- 20:: mass guiding plate
- 21:: knife part
- 22:: edge
- 23:: planar surfaces
- 24:: planar side of plate
- 25:: pivoting device
- 26:: pivoting shaft
- 27:: periphery of shaft
- 28:: hinge
- 29:: bar
- 30:: groove
- 31:: electrical servo-motor
- 32:: clutch
- 33:: screws
- 34:: flange
- 35:: center of feed roller
- 36:: leading surface of cam
- 37:: top of cam
- 38:: trailing surface of cam
- 39:: auxiliary roller
- 40:: electric motor
- A:: angular position in fig. 5
- B:: angular position in fig. 6
- C:: angular position in fig. 7
- D:: angular position in fig. 8

## Claims

1. Food depositing apparatus (1) comprising an elongated trough (2), at least one feed roller (12) arranged longitudinally in the trough (2) for transporting the mass in direction against at least one longitudinal mass deposit opening (13) at the bottom (14) of the trough (2),
which feed roller periphery (15) comprises a number of longitudinally extending cam parts (16) and intermediary mass transport recesses (17),
which longitudinal mass deposit opening (13) has a longitudinal, open mass feeding side (18) and an opposite, closed pressure side (19),
**characterised in,**
**that** the pressure side (19) is closed by a longitudinally extending mass guiding plate (20), which is supported, so that it is movable in directions radially in towards and out from the feed roller periphery (15),
which mass guiding plate (20) comprises a knife part (21) with a longitudinally extending edge (22) arranged at the periphery (15) of the feed roller (12),
**that** the mass guiding plate (20) is in engagement with a pivoting device (25), which is adapted to control the radial movements of the guiding plate (20) by following the radial geometrical positions of the feed roller periphery (15) during its rotation and influencing the radial position of the guiding plate (20),
so that the edge (22) of the knife part (21) follows the peripheral surface (15) of the feed roller (12) during rotation thereof, closely or in a predetermined distance thereof.

2. Apparatus according to one or more of claims 1, **characterised in, that** the pivoting device (25) comprises a longitudinally extending shaft (26), the periphery (27) of which is engaged by one or more hinges (28) with the side (24) of the plate (20).

3. Apparatus according to one or more of claims 1 or 2, **characterised in, that** at least one longitudinally extending bar (29) is arranged in a longitudinal groove (30) in the shaft (26), which bar (29) is connected to the side (24) of the plate (20).

4. Apparatus according to one or more of claims 1-3, **characterised in, that** the pressure side (19) of the opening (13) has planar surfaces (23) with radial extension, which is supporting the planar side (24) of the mass guiding plate (20).

5. Apparatus according to one or more of claims 1-4, **characterised in, that** the longitudinally extending shaft (26) is connected to an electrical servo-motor (31), which is controlled by a control unit such as a computer programmed with the radial geometrical positions of the feed roller periphery during rotation thereof.

6. Apparatus according to one or more of claims 1- 5, **characterised in, that** the pivoting (A, B, C, D) of the shaft (26) is adapted to the varying radial position of the feed roller periphery during its full rotation, so that the edge (22) of the knife part (21) is positioned in a constant distance from the peripheral surface (15) of the feed roller (12) providing a gap of a constant width therebetween.

7. Apparatus according to claim 6, **characterised in, that** the width of the gap is between 0,1 mm and 2,0 mm.

8. Apparatus according to one or more of the claims 1-7, **characterised in, that** the cross-sections of the cams (16), the recesses (17) and their mutual transitions consist of arc-shaped pieces, so that the cross-sections of the cams (16), the recesses (17) and their mutual transitions are smooth and without edges.

9. Apparatus according to one or more of the claims 1-8, **characterised in, that** at least six longitudinally extending, raised cam parts (16) and intermediary food transport recesses (17) are evenly arranged around the periphery (15) of the feed roller (12).

10. Apparatus according to one or more of the claims 1-9, **characterised in, that** the trough (2) comprises a further longitudinally extending, auxiliary roller (40) arranged above the feed roller (12) and close to the inside of the trough (2).
